(19) Europäisches Patentamt
European Patent Office
Office européen des brevets

(11) **EP 2 243 660 A2**

(12) **EUROPEAN PATENT APPLICATION**

(43) Date of publication:
**27.10.2010 Bulletin 2010/43**

(51) Int Cl.:
**B60Q 1/04** (2006.01)

(21) Application number: **10158358.1**

(22) Date of filing: **30.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **24.04.2009 JP 2009107086**

(71) Applicant: **Koito Manufacturing Co., Ltd.**
**Tokyo 108-8711 (JP)**

(72) Inventors:
• **Ohta, Shinji**
  **Shizuoka-shi, Shizuoka (JP)**
• **Ito, Masayasu**
  **Shizuoka-shi, Shizuoka (JP)**

(74) Representative: **HOFFMANN EITLE**
**Patent- und Rechtsanwälte**
**Arabellastrasse 4**
**81925 München (DE)**

(54) **Discharge lamp lighting circuit and discharge lamp lighting method**

(57)  A control circuit enters a grounding confirmation mode when detecting a first assumed grounding condition in which a driving current flowing to a discharge lamp is smaller than a first grounding detection current and a first driving voltage is lower than a first grounding detection voltage or detecting a second assumed grounding condition in which the driving current flowing to the discharge lamp is smaller than a second grounding detection current and a second driving voltage is lower than a second grounding detection voltage. In the grounding confirmation mode, the control circuit fixes a first DC/DC converter into an active state while the first assumed grounding condition is maintained continuously, and carries out a control for stopping a driving operation of the discharge lamp if the first assumed grounding condition is continuously maintained for a longer period of time than a first confirmation time, and fixes a second DC/DC converter into an active state while the second assumed grounding condition is maintained continuously, and carries out the control for stopping the driving operation of the discharge lamp if the second assumed grounding condition is continuously maintained for a longer period of time than a second confirmation time.

FIG. 1

EP 2 243 660 A2

**Description**

TECHNICAL FIELD

The present invention relates to a discharge lamp lighting circuit for AC driving a discharge lamp and a discharge lamp lighting method for AC driving a discharge lamp.

RELATED ART

In recent years, a metal halide lamp (which will be hereinafter referred to as a discharge lamp) has been utilized, as a lighting device for a vehicle, for example, a headlamp, in place of a related-art halogen lamp having a filament. Although the discharge lamp can obtain a higher light emission efficiency and a longer lifetime as compared with the halogen lamp, it requires several tens to several hundreds V as a driving voltage. For this reason, the discharge lamp cannot be driven directly by an on-vehicle battery of 12V or 24V. Therefore, a discharge lamp lighting circuit (which is also referred to as a ballast) is required.

A method of turning ON a discharge lamp is classified into DC driving and AC driving. However, the DC driving causes a discharging arc to be asymmetrical and a nonuniform light emitting profile. For this reason, the DC driving is not suitable for a utilization as a lighting device for a vehicle but the AC driving is generally carried out in the lighting device for a vehicle. When the discharge lamp is subjected to the AC driving at a high frequency of 10 kHz or more, there is generated a phenomenon in which an air current in a discharge tube and a lighting frequency are resonated with each other (which is referred to as an acoustic resonance). Consequently, there is caused a problem in that the discharging arc is unstable. At present, therefore, a driving method using a low frequency of 10 kHz or less (which is referred to as a low frequency driving method) is a mainstream in order to eliminate disadvantages of both of the DC driving and the high-frequency AC driving.

The discharge lamp lighting circuit includes a DC/DC converter for raising a battery voltage, a switching circuit such as an H bridge circuit for converting an output voltage of the DC/DC converter into an alternating current, a starter circuit and a control circuit for controlling the circuit blocks (for example, see Patent Document 1).

[Patent Document 1] JP-A-11-329777 Publication

SUMMARY

There will be considered a circuit structure in which DC/DC converters are provided on both ends of a discharge lamp and are operated alternately to supply an AC driving voltage to the both ends of the discharge lamp, thereby carrying out AC lighting. The applicant has proposed the circuit structure (which will be hereinafter referred to as a double converter type) in Japanese Patent Application No. 2008-299638.

A state in which a terminal of a discharge lamp is grounded unexpectedly through a small grounding resistor will be hereafter referred to as a grounding condition. For example, a state in which an insulating material of a wiring to the discharge lamp is broken so that an inner conductor touches a frame of a lighting device for a vehicle corresponds to the grounding condition.

Referring to a detection of the grounding condition in a discharge lamp lighting circuit, the inventor has recognized the following problem.

In the case in which the grounding condition is generated in the circuit structure of the double converter type, it is possible to detect an electrical state which is peculiar to the grounding condition in a phase in which the DC/DC converter connected to the terminal of the discharge lamp on a side where the grounding is generated is operated and it is impossible to detect the same condition in a phase in which the other DC/DC converter is operated. Accordingly, it is hard to detect the grounding condition as a whole.

Exemplary embodiments of the present invention provide a discharge lamp lighting circuit and a discharge lamp lighting method which properly detect a grounding condition in a discharge lamp lighting circuit for AC driving a discharge lamp.

A discharge lamp lighting circuit according to an exemplary embodiment of the invention comprises:

a first DC/DC converter configured to apply a first driving voltage to one of ends of a discharge lamp in an active state;
a second DC/DC converter configured to apply a second driving voltage to the other end of the discharge lamp in an active state; and
a control circuit configured to control the first and second DC/DC converters based on a normal operation mode and a grounding confirmation mode,

wherein in the normal operation mode, the control circuit is configured to alternately set the first and second DC/DC converters into the active state in a lighting cycle, thereby applying an AC driving voltage to the discharge lamp, wherein the control circuit is configured to enter the grounding confirmation mode when detecting a first assumed grounding condition in which a driving current flowing to the discharge lamp is smaller than a first grounding detection current and the first driving voltage is lower than a first grounding detection voltage or detecting a second assumed grounding condition in which the driving current flowing to the discharge lamp is smaller than a second grounding detection current and the second driving voltage is lower than a second grounding detection voltage, and wherein in the grounding confirmation mode, the control circuit is configured to fix the first DC/DC converter into the active state while the first assumed grounding condition is maintained continuously, and carries out a control for stopping a driving operation of the discharge lamp if the first assumed grounding condition is continuously maintained for a longer period of time than a first confirmation time, and fix the second DC/DC converter into the active state while the second assumed grounding condition is maintained continuously, and carries out the control for stopping the driving operation of the discharge lamp if the second assumed grounding condition is continuously maintained for a longer period of time than a second confirmation time.

According to the aspect, by providing the grounding confirmation mode for detecting the grounding condition, it is possible to detect the grounding condition as it is, thereby carrying out a control for stopping the driving operation of the discharge lamp.

The control circuit may be configured to set, in the grounding confirmation mode, an output power of the DC/DC converter fixed into the active state to be lower than that in the active state of the DC/DC converter in the normal operation mode. In this case, in the grounding confirmation mode, it is possible to reduce an output power of the DC/DC converter fixed into the active state before the control for stopping the driving operation of the discharge lamp is carried out.

The control circuit may be configured to be returned into the normal operation mode when the first assumed grounding condition is cancelled before the first confirmation time passes, and may be configured to be returned into the normal operation mode when the second assumed grounding condition is cancelled before the second confirmation time passes in the grounding confirmation mode. In this case, it is possible to offer an opportunity for a return from the grounding confirmation mode to the normal operation mode.

A discharge lamp lighting method according to an exemplary embodiment of the invention comprises:

setting a driving power to be supplied to a discharge lamp to be lower than that to be supplied in a normal operation when detecting an assumed grounding condition in which a driving current flowing to the discharge lamp is smaller than a grounding detection current and a driving voltage to be applied to the discharge lamp is lower than a grounding detection voltage;

carrying out a control for stopping a driving operation of the discharge lamp when the assumed grounding condition is continuously maintained for a longer period of time than a confirmation time; and

returning to a normal operation when the assumed grounding condition is cancelled before the confirmation time passes.

According to the aspect, in the case in which the assumed grounding condition is detected, it is possible to cause a driving power supplied to the discharge lamp to be lower than a driving power supplied in a normal operation before the control for stopping the driving operation of the discharge lamp is carried out. Moreover, it is also possible to give an opportunity for a return to the normal operation.

According to the aspect of the invention, it is possible to properly detect a grounding condition in a discharge lamp lighting circuit for AC driving a discharge lamp.

Other features and advantages may be apparent from the following detailed description, the accompanying drawings and the claims.

BRIEF DESCRIPTION OF THE DRAWINGS

Fig. 1 is a circuit diagram showing structures of discharge lamp lighting circuits according to the comparative example and an embodiment of the invention and members connected thereto;

Fig. 2 is a circuit diagram showing a structure of the control circuit of the discharge lamp lighting circuit according to the embodiment of the invention.

Fig. 3 is a time chart showing an operating state of the discharge lamp lighting circuit of according to the embodiment of the invention;

Figs. 4A and 4B are time charts showing an operating state after a DC period $\phi_{DC}$ of the discharge lamp lighting circuit according to the embodiment of the invention; and

Fig. 5 is a time chart showing an operating state of the discharge lamp lighting circuit according to the embodiment of the invention in the case in which the grounding is generated on one end side of a discharge lamp in a stationary lighting state.

## DETAILED DESCRIPTION

The same or equivalent components, members and processings shown in each of the drawings properly have the same designations and repetitive description will be omitted. Moreover, a part of the members which are not important to the description is displayed with an omission in each of the drawings. Furthermore, the designation attached to a voltage, a current or a resistance is used to represent a voltage value, a current value or a resistance value if necessary.

In the specification, "a state in which a member A is connected to a member B" includes the case in which the members A and B are physically connected directly to each other, and furthermore, the case in which the members A and B are indirectly connected through another member which does not influence an electrical connecting state. Similarly, "a state in which a member C is provided between members A and B" includes the case in which the members A and C or the members B and C are directly connected to each other, and furthermore, the case in which they are indirectly connected through another member which does not influence an electrical connecting state.

First of all, respects which have been recognized by the inventor and are to be improved will be described based on a structure of a discharge lamp lighting circuit 700 according to a comparative example.

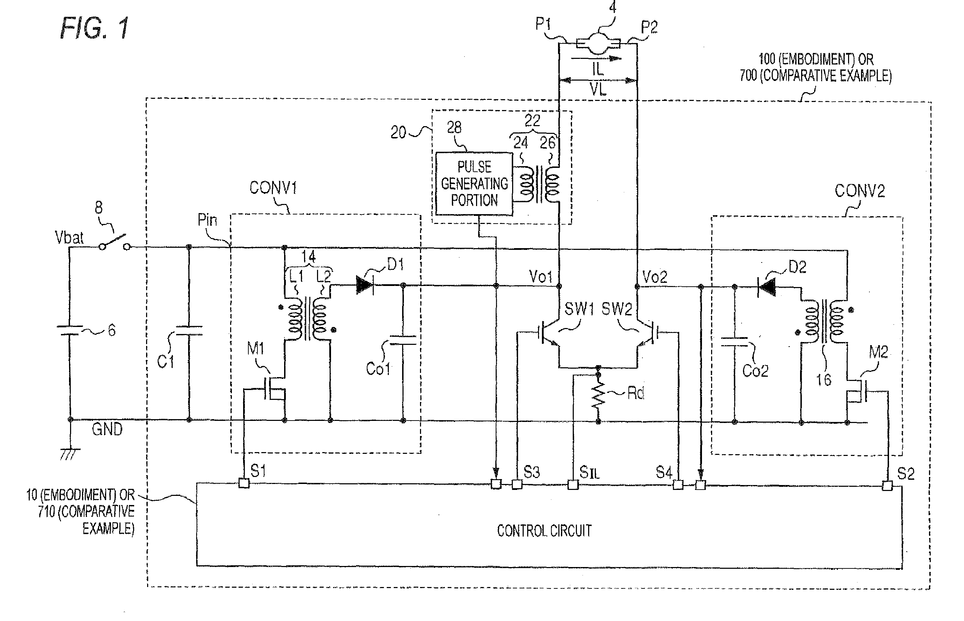

Fig. 1 is a circuit diagram showing structures of the discharge lamp lighting circuit 700 according to the comparative example and members connected thereto. Fig. 1 also shows a discharge lamp lighting circuit 100 according to an embodiment, which will be described below. The discharge lamp lighting circuit 700 drives a discharge lamp 4 to be an on-vehicle metal halide lamp. The discharge lamp lighting circuit 700 and the discharge lamp 4 are mounted on a lighting device for a vehicle. The discharge lamp lighting circuit 700 is connected to an on-vehicle battery (which will be hereinafter referred to as a battery) 6 and a power switch 8.

The battery 6 generates a DC battery voltage Vbat of 12V (or 24V). The power switch 8 is a relay switch disposed for controlling ON/OFF operations of the discharge lamp 4 and is provided in series to the battery 6. When the power switch 8 is turned ON, the battery voltage Vbat is supplied from the battery 6 to the discharge lamp lighting circuit 700.

The discharge lamp lighting circuit 700 raises the smoothed battery voltage Vbat and converts the raised battery voltage Vbat into an alternating current, and supplies the alternating current to the discharge lamp 4. Description will be given to a detailed structure of the discharge lamp lighting circuit 700.

The discharge lamp lighting circuit 700 includes a first DC/DC converter CONV1, a second DC/DC converter CONV2, a control circuit 710, a starter circuit 20, a first switch SW1, a second switch SW2, a current detecting resistor Rd and an input capacitor C1.

The input capacitor C1 is provided in parallel with the battery 6 and smoothes the battery voltage Vbat. More specifically, the input capacitor C1 is provided in the vicinity of a first transformer 14 and a second transformer 16, and fulfills a function for smoothing a voltage for a switching operation of the first DC/DC converter CONV1 and the second DC/DC converter CONV2.

The control circuit 710 includes a functional IC (Integrated Circuit) for controlling the whole discharge lamp lighting circuit 700 and controls a driving sequence of the discharge lamp lighting circuit 700, and furthermore, regulates a power to be supplied to the discharge lamp 4. The control circuit 710 executes the following driving sequence, thereby turning ON the discharge lamp 4 to stabilize a light output thereof.

1. Power ON operation
2. Breakdown
3. DC period
4. Run-up
5. Stationary lighting

The details of each sequence will be described below.

The first DC/DC converter CONY1, the second DC/DC converter CONV2, the first switch SW1 and the second switch SW2 form a driving voltage generating portion for generating a driving voltage VL for the discharge lamp 4. The driving voltage generating portion supplies the driving voltage VL to be an alternating current having a lighting frequency f1. to both ends of the discharge lamp 4 for the run-up and the stationary lighting period. The lighting frequency f1 is preferably set to be equal to or lower than 10 kHz, and furthermore, approximately 250 Hz to 750 Hz, and is set to be 312.5 Hz in the comparative example. An inverse number of the lighting frequency f1 is referred to as a lighting cycle T1 (= 1/f1). The lighting cycle T1 is 3.2 ms.

The first DC/DC converter CONV1 is a switching regulator of an insulating type, and includes a first switching device M1, the first transformer 14, a first rectifier diode D1 and a first output capacitor Col. Since the first DC/DC converter CONV1 has a general topology, brief description will be given.

A primary coil L1 of the first transformer 14 and the first switching device M1 are provided in parallel with the input capacitor C1 and in series between an input terminal Pin of the first DC/DC converter CONV1 and a grounding terminal (GND). For example, the first switching device M1 is constituted by an N-channel MOSFET (Metal Oxide Semiconductor Field Effect Transistor). A secondary coil L2 of the first transformer 14 has one of ends grounded and has the other end connected to an anode of the first rectifier diode D1. The first output capacitor Co1 is provided between a cathode of the first rectifier diode D1 and the grounding terminal.

A first control pulse signal S1 having a higher PWM frequency f2 than the lighting frequency f1 is applied to a control terminal (a gate) of the first switching device M1. For example, the PWM frequency f2 is 400 kHz. The first switching device M1 is turned ON when the first control pulse signal S1 has a high level and is turned OFF when the first control pulse signal S1 has a low level. The control circuit 710 regulates a duty ratio of the high and low levels of the first control pulse signal S1 through a feedback based on an electrical state of the discharge lamp 4.

The first DC/DC converter CONV1 can switch an active state and a non-active state, and supplies a first output voltage Vo1 to an end P1 of the discharge lamp 4 in the active state.

The second DC/DC converter CONV2 has the same circuit topology as the first DC/DC converter CONV1. In other words, the first rectifier diode D1 and a second rectifier diode D2, the first output capacitor Col I and a second output capacitor Co2, the first transformer 14 and the second transformer 16, and the first switching device M1 and a second switching device M2 correspond to each other. ON/OFF operations of the second switching device M2 are controlled in response to a second control pulse signal S2 generated by the control circuit 710 through a feedback based on the electrical state of the discharge lamp 4.

The second DC/DC converter CONV2 can also switch an active state and a non-active state, and supplies a second output voltage Vo2 to the other end P2 of the discharge lamp 4 in the active state.

The first switch SW1 is provided on the end P1 side of the discharge lamp 4 and electrically conducts the end P1 of the discharge lamp 4 to a fixed voltage terminal (a grounding terminal) in an ON state. The second switch SW2 is provided on the other end P2 side of the discharge lamp 4 and electrically conducts the end P2 of the discharge lamp 4 to the fixed voltage terminal (the grounding terminal) in the ON state. Although an IGBT (Insulated Gate Bipolar Transistor) or an MOSFET is suitable for the first switch SW1 and the second switch SW2, another alternative device may be used. The ON/OFF states of the first switch SW1 and the second switch SW2 are controlled in response to a first control signal S3 and a second control signal S4 which are sent from the control circuit 710.

The first DC/DC converter CONV1 and the second DC/DC converter CONV2 complementarily repeat the active state and the non-active state at the lighting frequency f1. In other words, each of a period for which the first DC/DC converter CONV1 is active and a period for which the second DC/DC converter CONV2 is active is set to have a half cycle of the lighting cycle T1. A state in which the first DC/DC converter CONV1 is active and a state in which the second DC/DC converter CONV2 is active will be hereinafter referred to as a first state $\phi 1$ and a second state $\phi 2$, respectively. The first switch SW1 is turned ON when the second DC/DC converter CONV2 is active, that is, in the second state $\phi 2$, and the second switch SW2 is turned ON when the first DC/DC converter CONV1 is active, that is, in the first state $\phi 1$.

In the first state $\phi 1$, the first output voltage Vo1 and a grounding voltage (0V) are applied to the end P1 and the other end P2 in the discharge lamp 4, respectively. As a result, the driving voltage VL (which is almost equal to Vo1) is applied with a first polarity to the discharge lamp 4. In the second state $\phi 2$, the second output voltage Vo2 and the grounding voltage are applied to the other end P2 and the end P1 in the discharge lamp 4, respectively. As a result, the driving voltage VL (which is almost equal to Vo2) is applied, to the discharge lamp 4, with a second polarity which is reverse to the first polarity.

For the run-up and the stationary lighting period, the control circuit 710 alternately repeats the first state $\phi 1$ and the second state $\phi 2$ in the lighting cycle T1. As a result, the AC driving voltage VL is supplied to the discharge lamp 4.

The current detecting resistor Rd is provided on a path for a lamp current IL flowing to the discharge lamp 4. In the circuit of Fig. 1, the current detecting resistor Rd is provided between emitters of the first switch SW1 and the second switch SW2 which are connected in common and the grounding terminal. In the first state $\phi 1$, a lamp current flows, to the discharge lamp 4, with the first polarity (in a rightward direction of Fig. 1). In the second state $\phi 2$, a lamp current flows, to the discharge lamp 4, with the second polarity (in a leftward direction of Fig. 1). A voltage drop (which will be referred to as a current detecting signal $S_{IL}$) which is proportional to the lamp current IL is generated in the current detecting resistor Rd in each of the first state $\phi 1$ and the second state $\phi 2$. The current detecting signal $S_{IL}$ is input to the control circuit 710.

The starter circuit 20 is provided for causing the discharge lamp 4 to break down. The starter circuit 20 includes a starter transformer 22 and a pulse generating portion 28. The pulse generating portion 28 applies a pulse voltage having an amplitude of 400V to 1kV to a primary coil 24 of the starter transformer 22. As a result, a high voltage pulse (for example, 20kV) corresponding to a winding ratio of the starter transformer 22 is generated on a secondary coil 26 side and is applied to the discharge lamp 4. As a result, the discharge lamp 4 causes the breakdown so that a discharge is started.

There will be supposed the case in which a grounding condition is generated in the discharge lamp lighting circuit 700.

In this case, the lamp current to be supplied to the discharge lamp 4 is sent away to the ground through a grounding resistor. For this reason, the discharge lamp 4 is turned OFF. The lamp current IL does not flow to the current detecting resistor Rd. Therefore, the lamp current IL is not detected. The driving voltage VL is also reduced because of a low grounding resistance. Consequently, a state in which an absolute value of the detected driving voltage VL is smaller than a predetermined grounding detection voltage $V_G$ and an absolute value of the detected lamp current IL is smaller than a predetermined grounding detection current $I_G$ is assumed to be a state in which the grounding condition might be generated (which will be hereinafter referred to as an assumed grounding condition). The grounding detection voltage $V_G$ has a smaller value than the driving voltage VL in a normal lighting operation, and the grounding detection current $I_G$ is supposed to represent that the discharge lamp 4 is turned OFF. In the case in which a mercury is not used in the discharge lamp 4, the grounding detection voltage $V_G$ is set to be 18V and the grounding detection current $I_G$ is set to be 0.3A.

The inventor verified whether the grounding condition can be properly detected or not in the discharge lamp lighting circuit 700 according to the comparative example. Table 1 shows a situation of an operation in the case in which grounding is generated on the first DC/DC converter CONV1 side, for example, in the vicinity of the end P1 of the discharge lamp 4.

[Table 1]

| | -------------------- Passage of time --------------------▶ | | | | | | Operate output open fail-safe function with passage of 500 ms |
|---|---|---|---|---|---|---|---|
| | CONV1 I | CONV2 | CONV1 | CONV2 | CONV1 | | |
| Operating time | 1.6ms | 1.6ms | 1.6ms | 1.6ms | 1.6ms | ----▶ | |
| VL detection value | Small | Raise voltage to 400V | Small | Raise voltage to 400V | Small | ----▶ | |
| IL detection value | 0A | 0A | 0A | 0A | 0A | ----▶ | |
| Assumed grounding condition | Detected | Not detected | Detected | Not detected | Detected | ----▶ | |

Table 2 shows a situation of an operation in the case in which the grounding is generated on the second DC/DC converter CONV2 side, for example, in the vicinity of the other end P2 of the discharge lamp 4.

[Table 2]

| | ---------------- Passage of time ----------------▶ | | | | | | Operate output open fail-safe function with passage of 500 ms |
|---|---|---|---|---|---|---|---|
| | CONV2 | CONV1 | CONV2 | CONV1 | CONV2 | | |
| Operating time | 1.6ms | 1.6ms | 1.6ms | 1.6ms | 1.6ms | ----▶ | |
| VL detection value | Small | Raise voltage to 400V | Small | Raise voltages to 400V | Small | ----▶ | |
| IL detection value | 0A | 0A | 0A | 0A | 0A | ----▶ | |
| Assumed grounding condition | Detected | Not detected | Detected | Not detected | Detected | ----▶ | |

An output voltage target value in an output open of the second DC/DC converter CONV2 is set to be 400V and an output voltage target value in an output open of the first DC/DC converter CONV1 is set to be 400V.

As is understood from the Tables 1 and 2, when the grounding condition is generated in the discharge lamp lighting circuit 700 according to the comparative example, the assumed grounding condition is detected/not detected repetitively every half cycle (1.6 ms) of the lighting cycle T1 (3.2 ms). In the half cycle (1.6 ms) in which the DC/DC converter connected to the terminal side of the discharge lamp 4 where the grounding is generated is set into the active state, the assumed grounding condition is detected. In the half cycle (1.6 ms) in which the DC/DC converter on an opposite side is set into the active state, the assumed grounding condition is not detected.

In the discharge lamp lighting circuit 700 according to the comparative example, it is also possible to suppose that a control for stopping the driving operation of the discharge lamp 4 is carried out by making a decision that the grounding condition is generated if the assumed grounding condition is continuously maintained for a shorter period than the half cycle (1.6 ms) of the lighting cycle T1 (3.2 ms). However, whether the grounding condition is generated in the half cycle (1.6 ms) of the lighting cycle T1 is decided for an excessively short period of time. For this reason, there is a possibility that an erroneous detection might be caused. Accordingly, it is impossible to employ the output grounding fail-safe function in the discharge lamp lighting circuit 700 according to the comparative example.

In the case in which the grounding condition is generated in the discharge lamp lighting circuit 700 according to the comparative example, there is continuously maintained a state in which the detected lamp current IL is smaller than a current value with which the discharge lamp 4 is OFF. For this reason, the output open fail-safe function is finally operated so that the driving operation of the discharge lamp 4 is stopped. In order to cause the output open fail-safe function to be operated, the state in which the lamp current IL is small is to be maintained continuously for 500 ms. The output open represents a state in which the discharge lamp 4 is unexpectedly turned OFF, for example, an arc is not formed in the discharge lamp 4 even if the driving voltage VL is applied.

In the discharge lamp lighting circuit 700 according to the comparative example, the grounding is detected depending on a function for detecting the output open. However, it is hard to immediately decide whether the grounding condition is generated to stop the driving operation of the discharge lamp 4 or the output open is generated to stop the driving operation when the driving operation is stopped. This is not preferable in respect of an investigation of a cause. After all, it is necessary to detect the grounding condition as it is, thereby operating the output grounding fail-safe function.

Moreover, there will be considered the case in which the grounding is generated in the vicinity of the end P1 of the discharge lamp 4. In the half cycle in which the first DC/DC converter CONY1 is set into the active state, a current output from the first DC/DC converter CONV1 flows from the vicinity of the end P1 to the ground through the grounding resistor and returns from the grounding terminal of the first DC/DC converter CONV1 to the first DC/DC converter CONV1. and flows to the secondary coil L2 of the first DC/DC converter CONV1 and the first rectifier diode D1. When the grounding condition is generated, furthermore, the first output voltage Vo1 is dropped as described above and the absolute value of the detected lamp current IL is also decreased. Accordingly, the control circuit 710 decides that the output power is low and the duty ratio of the first control pulse signal S1 is increased to try to increase the output power of the first DC/DC converter CONV1. As the result described above, particularly, a large current (which will be hereinafter referred to as a grounding current) flows to the first rectifier diode D1 so that a power loss and a heat generation might be increased therein.

When the polarity is switched so that the second DC/DC converter CONV2 is set into the active state, the second DC/DC converter CONV2 is subjected to an output open control (which is also referred to as an OCV control) because the discharge lamp 4 is OFF. The output open control is a normal control in a decision that an output side is open, and the second DC/DC converter CONV2 is controlled in such a manner that an output voltage thereof is set to be 400V. When the polarity is switched again so that the first DC/DC converter CONV1 is set into the active state, then, a large grounding current flows to the first rectifier diode D1 again until the grounding condition in the vicinity of the end P1 is cancelled. Although the large grounding current does not flow continuously, it flows for a half period (250 ms) of a period (500 ms) till the operation of the output open fail-safe function. Consequently, the power loss is excessively increased in the first rectifier diode D1 so that a safety might be deteriorated.

In consideration of the respects to be improved, the inventor created the discharge lamp lighting circuit 100 according to the embodiment.
Description will be given to structures of the discharge lamp lighting circuit 100 according to the embodiment and members connected thereto. The discharge lamp lighting circuit 100 includes a first DC/DC converter CONV1, a second DC/DC converter CONV2, a control circuit 10, a starter circuit 20, a first switch SW1, a second switch SW2, a current detecting resistor Rd, and an input capacitor C1. The discharge lamp lighting circuit 100 according to the embodiment is mainly different from the discharge lamp lighting circuit 700 according to the comparative example in that the control circuit 10 of the discharge lamp lighting circuit 100 according to the embodiment has a grounding confirmation mode in addition to a normal operation mode.

The control circuit 10 alternately sets the first and second DC/DC converters CONV1 and CONV2 into an active state in a lighting cycle T1, thereby applying an AC driving voltage VL to a discharge lamp 4 in the normal operation mode.

The control circuit 10 enters the grounding confirmation mode when detecting a first assumed grounding condition in which an absolute value of a detected lamp current IL is smaller than a grounding detection current $I_G$ and a detected first output voltage Vo1 is lower than a grounding detection voltage $V_G$ in a half cycle (a first state $\phi 1$) in which

the first DC/DC converter CONV1 is set into the active state. Moreover, the control circuit 10 enters the grounding confirmation mode when detecting a second assumed grounding condition in which the absolute value of the detected lamp current IL is smaller than the grounding detection current $I_G$ and a detected second output voltage Vo2 is lower than the grounding detection voltage $V_G$ in a half cycle (a second state $\phi2$) in which the second DC/DC converter CONV2 is set into the active state.

In the grounding confirmation mode, the control circuit 10 has the following three functions.

1. The control circuit 10 fixes the first DC/DC converter CONV1 into the active state while the first assumed grounding condition is maintained continuously, and carries out a control for stopping the driving operation of the discharge lamp 4 when the first assumed grounding condition is maintained for a longer period of time than a predetermined confirmation time Tc. The control circuit 10 fixes the second DC/DC converter CONV2 into the active state while the second assumed grounding condition is maintained continuously, and carries out the control for stopping the driving operation of the discharge lamp 4 when the second assumed grounding condition is maintained for a longer period of time than the confirmation time Tc.

2. The control circuit 10 sets an output power of the DC/DC converter fixed into the active state to be lower than an output power in the active state of the DC/DC converter in the normal operation mode.

3. The control circuit 10 is returned to the normal operation mode when the first assumed grounding condition is cancelled before the confirmation time Tc passes and is returned to the normal operation mode when the second assumed grounding condition is cancelled before the confirmation time Tc passes.

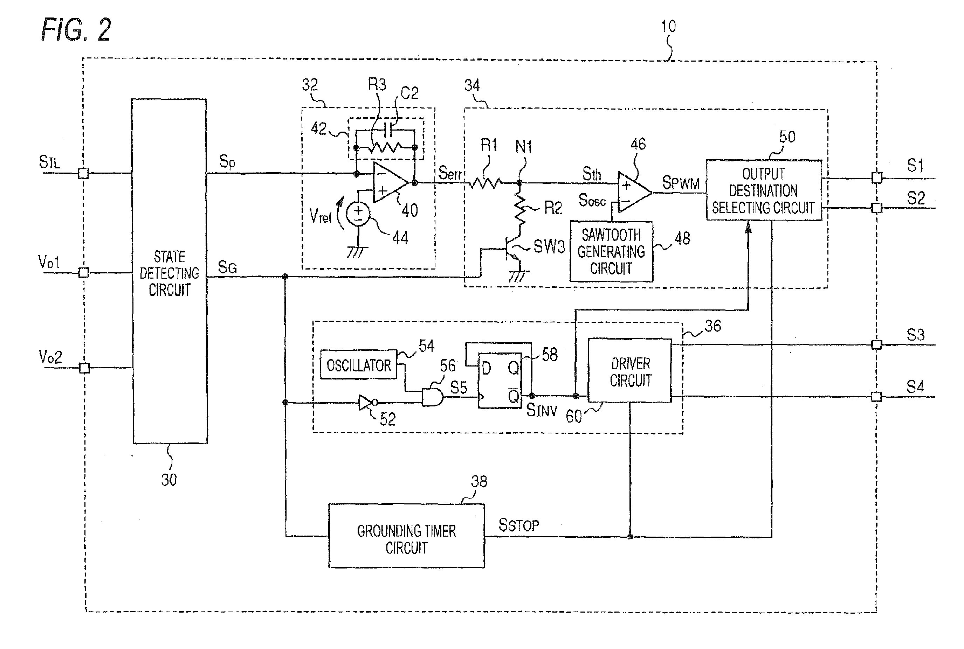

Fig. 2 is a circuit diagram showing a structure of the control circuit 10. The control circuit 10 includes other members for causing the discharge lamp lighting circuit 100 to function in addition to members shown in Fig. 2. For clarity of explanation, however, the members are not shown in Fig. 2.

The control circuit 10 includes a state detecting circuit 30, a power control circuit 32, a driving signal generating circuit 34, a polarity control circuit 36 and a grounding timer circuit 38.

The state detecting circuit 30 detects an electrical state of the discharge lamp 4 upon receipt of a current detection signal $S_{IL}$, the first output voltage Vo1 and the second output voltage Vo2. The state detecting circuit 30 outputs, to the power control circuit 32, a power information signal Sp indicative of a driving power (VL X IL) supplied to the discharge lamp 4.

The state detecting circuit 30 generates an assumed grounding signal $S_G$ to be asserted (for example, to be set into a high level) when detecting the first assumed grounding condition in the first state $\phi1$ or detecting the second assumed grounding condition in the second state $\phi2$. The state detecting circuit 30 maintains the assumed grounding signal $S_G$ to have the high level for a period for which the first assumed grounding condition or the second assumed grounding condition is detected. The state detecting circuit 30 outputs the assumed grounding signal $S_G$ to the driving signal generating circuit 34, the polarity control circuit 36 and the grounding timer circuit 38, respectively. The control circuit 10 enters the grounding confirmation mode when the assumed grounding signal $S_G$ makes a transition to the high level, and maintains the grounding confirmation mode while the assumed grounding signal $S_G$ holds the high level.

The power control circuit 32 includes an error amplifier 40, a phase compensating circuit 42 and a reference voltage source 44.

The error amplifier 40 amplifies an error between a voltage of the power information signal Sp and a reference voltage Vref generated by the reference voltage source 44 and generates an error output signal Serr. A value of the reference voltage Vref is set based on a desired target power.

The phase compensating circuit 42 compensates a phase of the error output signal Serr for that of the power information signal Sp and prevents an oscillation of the whole control circuit 10. The phase compensating circuit 42 includes a phase compensating capacitor C2 and a phase compensating resistor R3 which are provided in parallel between the power information signal Sp and the error output signal Serr.

The error output signal Serr changes an output power of the DC/DC converter as will be described below. As seen from the whole control circuit 10, there is carried out such a control that the voltage of the power information signal Sp approximates to the reference voltage Vref, that is, a driving power to be supplied to the discharge lamp 4 approximates to a target power.

The driving signal generating circuit 34 includes a PWM comparator 46, a sawtooth generating circuit 48, an output destination selecting circuit 50, a first resistor R1, a second resistor R2 and a third switch SW3.

The error output signal Serr is input to a non-inverting input terminal of the PWM comparator 46 through the first resistor R1. One of ends of the second resistor R2 is connected to a first connecting node N1 between the first resistor R1 and the non-inverting input terminal of the PWM comparator 46. The other end of the second resistor R2 is grounded when the third switch SW3 to be an npn type bipolar transistor is turned ON. The other end of the second resistor R2 is connected to a collector of the third switch SW3, and an emitter is grounded. The assumed grounding signal $S_G$ is input to a base of the third switch SW3. A signal in the first connecting node N1 is referred to as a threshold signal Sth and a voltage of the threshold signal Sth is referred to as a PWM threshold voltage Vth.

The sawtooth generating circuit 48 generates a cyclic signal Sosc having a triangular wave-shaped or sawtooth cyclic voltage at a PWM frequency f2.

The PWM comparator 46 compares the threshold signal Sth with the cyclic signal Sosc, thereby generating a PWM signal $S_{PWM}$.

The output destination selecting circuit 50 receives an inverter signal $S_{INV}$ which will be described below, the PWM signal $S_{PWM}$, and a driving stop signal $S_{STOP}$. The output destination selecting circuit 50 is constituted to include a buffer circuit for amplifying the PWM signal $S_{PWM}$. The output destination selecting circuit 50 outputs the amplified PWM signal $S_{PWM}$ as a first control pulse signal S1 to a control terminal of a first switching device M1 when the inverter signal $S_{INV}$ takes a high level. In this case, the output destination selecting circuit 50 fixes a second control pulse signal S2 into a low level, thereby turning OFF a second switching device M2.

The output destination selecting circuit 50 outputs the amplified PWM signal $S_{PWM}$ as the second control pulse signal S2 to a control terminal of the second switching device M2 when the inverter signal $S_{INV}$ takes the low level. In this case, the output destination selecting circuit 50 fixes the first control pulse signal S1 I into the low level, thereby turning OFF the first switching device M1.

When detecting a pulse in the driving stop signal $S_{STOP}$, the output destination selecting circuit 50 fixes both the first control pulse signal S1 and the second control pulse signal S2 into the low level, thereby stopping the driving operation of the DC/DC converter.

When the first assumed grounding condition or the second assumed grounding condition is detected so that the assumed grounding signal $S_G$ is set to have a high level, the third switch SW3 is turned ON so that the PWM threshold voltage Vth of the first connecting node N1 is dropped. In other words, in the case in which the PWM threshold voltage Vth of the first connecting node N1 in the normal operation mode in place of the grounding confirmation mode is represented as Vth (normal), the PWM threshold voltage Vth (Vth (in a grounding confirmation)) is expressed as follows when the assumed grounding signal $S_G$ is set to have the high level (the grounding confirmation mode).

[Equation 1]

$$\text{Vth (grounding confirmation)}$$
$$= R2 \,/\, (R1 + R2) \times \text{Vth (normal)} \qquad \cdots \text{(Equation 1)}$$

When the grounding confirmation mode is started, thus, a duty ratio of the PWM signal $S_{PWM}$ output from the PWM comparator 46 is reduced. Consequently, an output power of the DC/DC converter set into the active state, that is, either of the DC/DC converters from which the PWM signal $S_{PWM}$ is output is lower than that in the normal operation mode. A ratio of the first resistance R1 to the second resistance R2 is determined in such a manner that a desirable duty ratio can be obtained in the grounding confirmation mode.

The polarity control circuit 36 generates the inverter signal $S_{INV}$ and supplies the inverter signal $S_{INV}$ to the output destination selecting circuit 50. The inverter signal $S_{INV}$ takes a complementary level in the first and second states $\phi1$ and $\phi2$. The inverter signal $S_{INV}$ is set to have the high level in the first state $\phi1$ and is set to have the low level in the second state $\phi2$. The polarity control circuit 36 causes the inverter signal $S_{INV}$ to hold a level (a polarity) when the assumed grounding signal $S_G$ makes a transition to the high level. For example, in the case in which the inverter signal $S_{INV}$ has the high level when the assumed grounding signal $S_G$ makes the transition to the high level (grounding is generated in the first state $\phi1$), the inverter signal $S_{INV}$ is maintained to have the high level until the assumed grounding signal $S_G$ then makes a transition to the low level. Consequently, the first DC/DC converter CONV1 is fixed into the active state while the first assumed grounding condition is maintained continuously. In the case in which the inverter signal $S_{INV}$ has the low level when the assumed grounding signal $S_G$ makes the transition to the high level (the grounding is generated in the second state $\phi2$), moreover, the inverter signal $S_{INV}$ is maintained to have the low level until the assumed grounding signal $S_G$ then makes a transition to the low level. Consequently, the second DC/DC converter CONV2 is fixed into the active state while the second assumed grounding condition is maintained continuously. As described above, furthermore, the output power of the DC/DC converter set into the active state is lower than that in the normal operation when the assumed grounding signal $S_G$ is set to have the high level. Therefore, it is apparent that the output power of the DC/DC converter fixed into the active state by the polarity control circuit 36 in the grounding confirmation mode is lower than that in the normal operation mode.

The polarity control circuit 36 includes an inverter 52, an oscillator 54, an AND gate 56, a D flip-flop 58, and a driver circuit 60.

The inverter 52 generates a logical inversion of the assumed grounding signal $S_G$ and outputs the logical inversion to the AND gate 56. The oscillator 54 generates a rectangular wave having a frequency of 625 Hz which is a double of a lighting frequency f1 (312.5 Hz) and outputs the rectangular wave to the AND gate 56. The AND gate 56 outputs AND of the output of the inverter 52 and that of the oscillator 54 as a clock signal S5 to a clock terminal of the D flip-flop 58. When the assumed grounding signal $S_G$ has a low level, that is, in the normal operation mode, the clock signal S5 has a rectangular wave having a frequency of 625 Hz. When the assumed grounding signal $S_G$ has a high level, that is, in the grounding confirmation mode, the clock signal S5 maintains the low level.

The D flip-flop 58 carries out a 2-division over the clock signal S5. The inverter signal $S_{INV}$ output from an inverting output terminal of the D flip-flop 58 is input to a data terminal of the D flip-flop 58. In the normal operation mode, the inverter signal $S_{INV}$ has a rectangular wave in the lighting frequency f1 (312.5 Hz). When the assumed grounding signal $S_G$ is set to have the high level so that the clock signal S5 is set to have the low level, the inverter signal $S_{INV}$ maintains a level in a transition of the assumed grounding signal $S_G$ to the high level.

The driver circuit 60 is constituted to include a buffer circuit for amplifying the inverter signal $S_{INV}$. The driver circuit 60 outputs the amplified inverter signal $S_{INV}$ as a second control signal S4 to a control terminal of the second switch SW2. The driver circuit 60 outputs a signal obtained by logically inverting the amplified inverter signal $S_{INV}$ as a first control signal S3 to a control terminal of the first switch SW1.

The driving stop signal $S_{STOP}$ is input to the driver circuit 60. When detecting a pulse in the driving stop signal $S_{STOP}$, the driver circuit 60 sets both the first control signal S3 and the second control signal S4 to have the low level, thereby turning OFF both the first switch SW1 and the second switch SW2.

The frequency of the rectangular wave generated by the oscillator 54 is set to be 100 Hz which is a double of 50 Hz for a DC period which will be described below. Moreover, the level of the output of the oscillator 54 is fixed from a power ON operation to a breakdown.

The grounding timer circuit 38 counts a length of a period for which the assumed grounding signal $S_G$ holds the high level, and generates a pulse in the driving stop signal $S_{STOP}$ when the period is longer than the confirmation time Tc. As described in the explanation of the output destination selecting circuit 50 and the driver circuit 60, when the pulse is generated in the driving stop signal $S_{STOP}$, the control for stopping the driving operation of the discharge lamp 4 is carried out. The confirmation time Tc represents a so-called time required for confirming whether a grounding condition is caused or not. The confirmation time Tc is set to have a value which is great to prevent an erroneous detection of grounding and is small to cause a loss in a first rectifier diode D1 or a second rectifier diode D2 due to a grounding current to be included within a tolerance, for example, 100 ms. The confirmation time Tc may be determined by an experiment.

After the first assumed grounding condition is detected so that the assumed grounding signal $S_G$ is set to have the high level, the assumed grounding signal $S_G$ is returned to have the low level when the first assumed grounding condition is cancelled before the pulse is generated in the driving stop signal $S_{STOP}$. Consequently, the count in the grounding timer circuit 38 is reset and the control circuit 10 is returned into the normal operation mode as is apparent from the explanation of the driving signal generating circuit 34 and the polarity control circuit 36. The second assumed grounding condition is the same.

"The first assumed grounding condition is cancelled" implies that the absolute value of the detected lamp current IL is greater than the grounding detection current $I_G$ or the detected first output voltage Vo1 is higher than the grounding detection voltage $V_G$. "The second assumed grounding condition is cancelled" implies that the absolute value of the detected lamp current IL is greater than the grounding detection current $I_G$ or the detected second output voltage Vo2 is higher than the grounding detection voltage $V_G$.

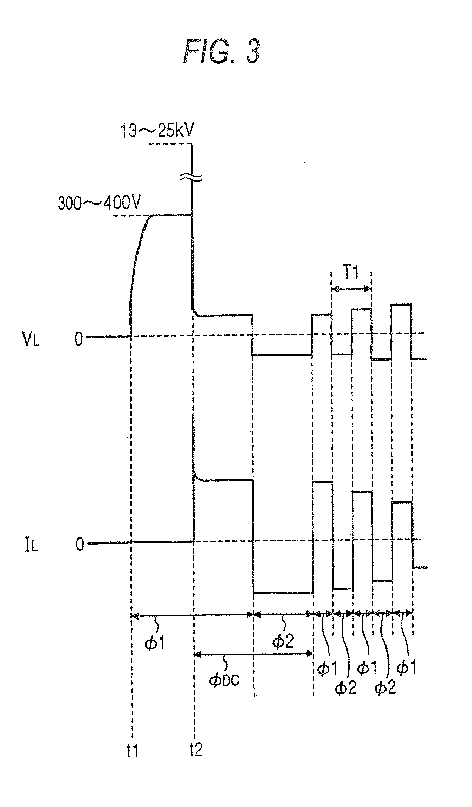

The structure of the discharge lamp lighting circuit 100 has been described above. Subsequently, an operation will be described in accordance with a sequence. Fig. 3 is a time chart showing an operating state of the discharge lamp lighting circuit 100. An axis of ordinate and an axis of abscissa in Fig. 3 are properly enlarged and reduced for easy understanding, and each waveform shown in Fig. 3 is simplified for the easy understanding.

1. Power ON Operation

When a user turns ON the power switch 8 at a time t1, the discharge lamp lighting circuit 100 is started. The control circuit 10 sets the first DC/DC converter CONV1 into the active state and sets the first switch SW1 into an OFF state (the first state φ1), and raises the battery voltage Vbat into a predetermined high voltage (400V), thereby carrying out a stabilization.

2. Breakdown

The starter circuit 20 receives the first output voltage Va1 of 400V which is generated by the first DC/DC converter CONV1. The pulse generating portion 28 applies a pulse having an amplitude of 400V to the primary coil 24 of the starter transformer 22. As shown in Fig. 3, a high voltage pulse of 20 kV or more is generated in the secondary coil 26 of the starter transformer 22 at this time. As a result, the driving voltage of the discharge lamp 4 is raised to approximately 13 to 15 kV and breaks down at a time t2 so that a glow discharge is started.

### 3. DC period $\phi_{DC}$

After the breakdown, first of all, the control circuit 10 carries out a control for causing the lamp current IL to flow for approximately 10 ms in a direction of the first polarity in the first state $\phi 1$. Next, the control circuit 10 carries out switching into the second state $\phi 2$ and performs a control for causing the lamp current IL to flow for approximately 10 ms in a direction of the second polarity. The period will be referred to as a DC period $\phi_{DC}$. For the DC period $\phi_{DC}$, a transition from the glow discharge to an arc discharge is made.

When the arc discharge is stabilized after the DC period $\phi_{DC}$ is ended, the control circuit 10 controls the first DC/DC converter CONV1, the second DC/DC converter CONV2, the first switch SW1 and the second switch SW2 and alternately repeats the first state $\phi 1$ and the second state $\phi 2$ in the lighting cycle T1.

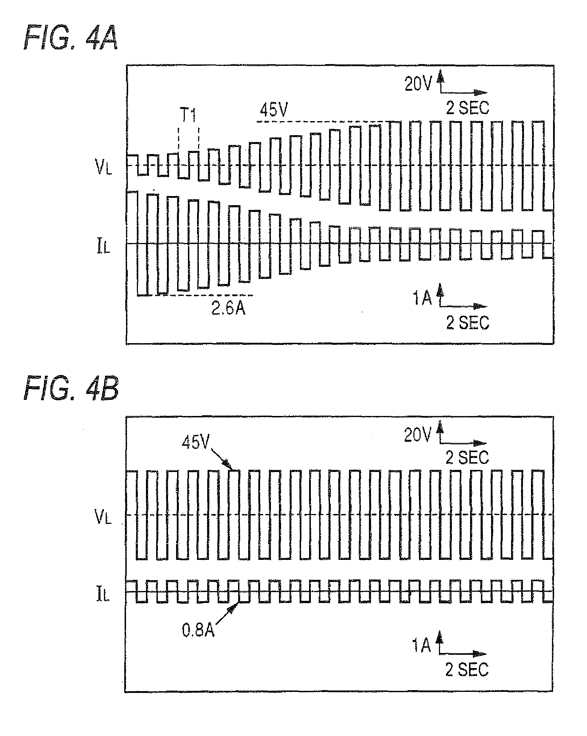

Figs. 4A and 4B are time charts showing an operating state after the DC period $\phi_{DC}$ of the discharge lamp lighting circuit 100. An axis of ordinate and an axis of abscissa in each of Figs. 4A and 4B are properly enlarged and reduced for easy understanding. Moreover, each waveform shown in Figs. 4A and 4B is also simplified for the easy understanding. Figs. 4A and 4B show a waveform in a run-up process and stationary lighting, respectively.

### 4. Run-up

With a growth of the arc discharge, a light output of the discharge lamp 4 is raised. A rise in the light output is determined by the standards, and the control circuit 10 monitors the first output voltage Vo1, the second output voltage Vo2 and the lamp current IL and regulates a duty ratio of ON/OFF operations of the first switching device M1 and the second switching device M2 through a feedback in order to obtain a light output (power) matched with the standards. The discharge lamp lighting circuit 100 temporarily supplies a higher overpower than a rated power and then stabilizes the lamp voltage and the lamp current IL to be 45V and 0.8A respectively, thereby approximating to the rated power (35W) in order to rapidly raise the light output of the discharge lamp 4 for a run-up period (Fig. 4A).

### 5. Stationary Lighting

When the light output of the discharge lamp 4 is stabilized through the run-up process, the power supplied to the discharge lamp 4 is stabilized to have the rated value of 35W (Fig. 4B). The waveforms of the driving voltage VL and the lamp current IL shown in Figs. 4A and 4B are simplified to be easily seen, and actually have frequencies of 250 Hz to 750 Hz.

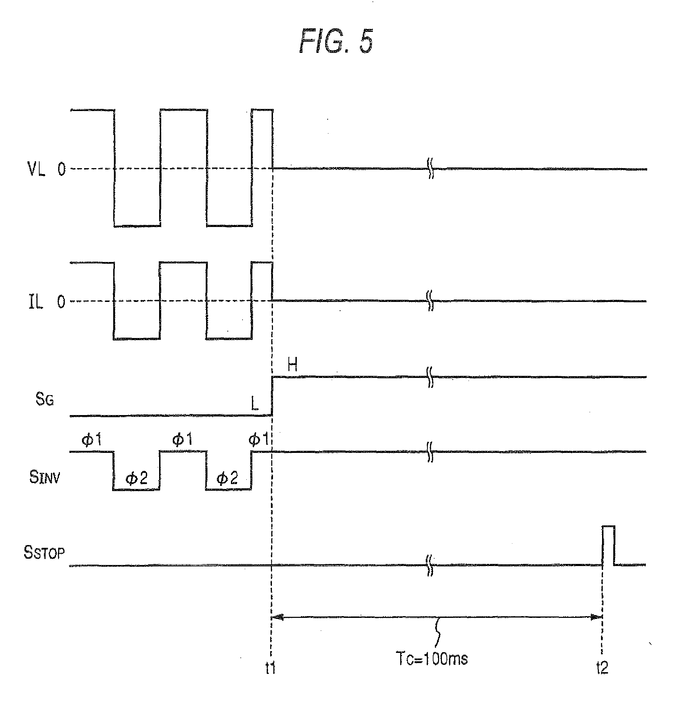

Fig. 5 is a time chart showing the operating state of the discharge lamp lighting circuit 100 in the case in which the grounding is generated on the end P1 side of the discharge lamp 4 in the stationary lighting state. An axis of ordinate and an axis of abscissa in Fig. 5 are properly enlarged and reduced for easy understanding. Moreover, each waveform shown in Fig. 5 is also simplified for the easy understanding. In Fig. 5, the driving voltage VL, the lamp current IL, the assumed grounding signal $S_G$, the inverter signal $S_{INV}$ and the driving stop signal $S_{STOP}$ are shown from an upper part.

It is assumed that the grounding is generated on the end P1 side of the discharge lamp 4 at the time t1 in the middle of the first state $\phi 1$ in which the first DC/DC converter CONV1 is set into the active state. Consequently, the discharge lamp 4 is turned OFF, the driving voltage VL (which is almost equal to the first output voltage Vo1) is lower than the grounding detection voltage $V_G$, and the absolute value of the lamp current IL is smaller than the grounding detection current $I_G$. The state detecting circuit 30 detects the first assumed grounding condition to set the assumed grounding signal $S_G$ into the high level. The polarity control circuit 36 sets the inverter signal $S_{INV}$ into the high level, that is, fixes the inverter signal $S_{INV}$ into the first state $\phi 1$ upon receipt of a transition of the assumed grounding signal $S_G$ into the high level.

The first DC/DC converter CONV1 is fixed into the active state. Therefore, the driving voltage VL (which is almost equal to the first output voltage Vo1) is maintained to be lower than the grounding detection voltage $V_G$ and the absolute value of the lamp current IL is maintained to be smaller than the grounding detection current $I_G$ until the grounding condition on the end P1 side of the discharge lamp 4 is cancelled. Consequently, the assumed grounding signal $S_G$ is maintained to have the high level.

The grounding timer circuit 38 generates a pulse in the driving stop signal $S_{STOP}$ at the time t2 that a length of a period for which the assumed grounding signal $S_G$ is maintained to have the high level reaches 100 ms to be the confirmation time Tc. The discharge lamp lighting circuit 100 is brought into a state in which the driving operation of the discharge lamp 4 is to be stopped.

Although the driving voltage VL and the lamp current IL are shown to be zero after the time t1 in Fig. 5, they may actually have a value which is not zero but approximates to zero or is zero.

The operation of the discharge lamp lighting circuit 100 according to the embodiment has been described above. The discharge lamp lighting circuit 100 has the following advantages.

(1) According to the discharge lamp lighting circuit 100 in accordance with the embodiment, it is possible to detect the grounding condition as it is and to operate an output grounding fail-safe function by providing the grounding confirmation mode for detecting the grounding condition. Also in the case in which the fail-safe function is operated to stop the driving operation of the discharge lamp 4, consequently, it is possible to easily decide whether the phenomenon is caused by the grounding or not.

(2) In the discharge lamp lighting circuit 100 according to the embodiment, moreover, a sufficient longer time than the half cycle (1.6 ms) of the lighting cycle T1 can be set to be the confirmation time Tc which is a time required for confirming whether the grounding condition is generated or not. Consequently, it is possible to reduce a possibility that the grounding might be detected erroneously.

(3) In the discharge lamp lighting circuit 700 according to the comparative example, the grounding condition is detected depending on the output open fail-safe function. For this reason, it is necessary to wait for the operation of the output open fail-safe function (500 ms) after the generation of the grounding condition in order to stop the driving operation of the discharge lamp 4. The value of 500 ms is determined based on a request for the output open fail-safe function. Consequently, it is impossible to freely set the value in respect of the detection of the grounding. In the discharge lamp lighting circuit 100 according to the embodiment, therefore, it is possible to freely set the confirmation time Tc in the grounding timer circuit 38 in respect of the detection of the grounding. By setting the confirmation time Tc to be 100 ms which is smaller than 500 ms of the output open fail-safe function, for example, it is possible to relieve a power loss in the first rectifier diode D1 or the second rectifier diode D2 to which a grounding current flows in the case in which the grounding condition is generated.

(4) In the discharge lamp lighting circuit 100 according to the embodiment, in the grounding confirmation mode, the output power of the DC/DC converter which is fixed into the active state is set to be lower than that in the active state of the DC/DC converter in the normal operation mode. Accordingly, it is possible to reduce the grounding current flowing to the first rectifier diode D1 or the second rectifier diode D2 when the grounding condition is generated. Consequently, it is possible to further relieve the power loss in the first rectifier diode D1 or the second rectifier diode D2.

(5) Moreover, the discharge lamp lighting circuit 100 according to the embodiment is returned into the normal operation mode when the assumed grounding condition is cancelled before the confirmation time Tc passes in the grounding confirmation mode. In the case in which the grounding condition is cancelled before the fail-safe function is operated, consequently, it is possible to offer an opportunity for returning to the normal operation.

The invention has been described above based on the embodiment. It will be understood to the skilled in the art that the embodiment is illustrative, and various variants can be applied to a combination of each component or each processing process and are also included in the scope of the invention.

Although the description has been given to case in which the same grounding detection voltage $V_G$ and the same grounding detection current $I_G$ are used in both the first assumed grounding condition and the second assumed grounding condition in the embodiment, the invention is not restricted thereto. For example, the first assumed grounding condition may be set to be a state in which the absolute value of the detected lamp current IL is smaller than a predetermined first grounding detection current and the detected first output voltage Vo1 is lower than the predetermined first grounding detection voltage, and the second assumed grounding condition may be set to be a state in which the absolute value of the detected lamp current IL is smaller than the first grounding detection current and the detected second output voltage Vo2 is lower than the second grounding detection voltage which is different from the first grounding detection voltage. Moreover, the second assumed grounding condition may be set to be a state in which the absolute value of the detected lamp current IL is smaller than the second grounding detection current which is different from the first grounding detection current and the detected second output voltage Vo2 is lower than the second grounding detection voltage which is different from the first grounding detection voltage. In these cases, it is possible to appropriately set a condition for detecting the assumed grounding condition corresponding to a characteristic of each of the DC/DC converters.

Although the description has been given to the case in which the control circuit 10 uses the same confirmation time Tc for both the first assumed grounding condition and the second assumed grounding condition in the embodiment, the invention is not restricted thereto. For example, the control circuit 10 may carry out the control for stopping the driving operation of the discharge lamp 4 when the first assumed grounding condition is maintained for a longer period of time than a predetermined first confirmation time, and may carry out the control for stopping the driving operation of the discharge lamp 4 when the second assumed grounding condition is maintained for a longer period of time than a second confirmation time which is different from the first confirmation time. In this case, it is possible to appropriately set the output grounding fail-safe function corresponding to the characteristic of each of the DC/DC converters.

Although the description has been given to the case in which the driver circuit 60 sets both the first control signal S3 and the second control signal S4 to have the low level and thus turns OFF both the first switch SW1 and the second switch SW2 when detecting the pulse in the driving stop signal $S_{STOP}$ in the embodiment, the invention is not restricted thereto. The driver circuit 60 may set both the first control signal S3 and the second control signal S4 to have the high level or may maintain a state obtained in a detection of a pulse in the driving stop signal $S_{STOP}$ when detecting the pulse. In other words, it is preferable that the driver circuit 60 should stop the driving operations of the first switch SW1 and the second switch SW2 when detecting the pulse in the driving stop signal $S_{STOP}$.

Although the description has been given to the case in which the output destination selecting circuit 50 fixes both the first control pulse signal S1 and the second control pulse signal S2 into the low level and thus stops the driving operation of the DC/DC converter when detecting the pulse in the driving stop signal $S_{STOP}$ in the embodiment, the invention is not restricted thereto. It is preferable that the control circuit 10 should have a structure in which the driving operations of the first DC/DC converter CONV1 and the second DC/DC converter CONV2 are stopped when the pulse appears in the driving stop signal $S_{STOP}$.

Although the description has been given to the case in which a current is sunk from the first connecting node N1 on the input side of the PWM comparator 46 to reduce the duty ratio of the PWM signal $S_{PWM}$ in the grounding confirmation mode in the embodiment, the invention is not restricted thereto. For example, it is also possible to increase an inclination of a sawtooth wave in the cyclic signal $S_{osc}$ generated in the sawtooth generating circuit 48. In this case, it is possible to regulate the inclination of the sawtooth wave in the cyclic signal $S_{OSC}$ in order to give a desirable duty ratio in the grounding confirmation mode.

Although the description has been given to the case in which the control circuit 10 fixes the first DC/DC converter CONV1 into the active state while the first assumed grounding condition is maintained continuously and fixes the second DC/DC converter CONV2 into the active state while the second assumed grounding condition is maintained continuously in the grounding confirmation mode in the embodiment, the invention is not restricted thereto. By further taking note of an object to relieve a burden to the first rectifier diode D1 or the second rectifier diode D2 to which the grounding current flows in the case in which the grounding condition is generated, the control circuit may have the following three functions.

1. A function for setting the driving power to be supplied to the discharge lamp 4 to be lower than a driving power to be supplied in a normal operation when detecting a third assumed grounding condition in which the lamp current IL is smaller than a predetermined third grounding detection current and the driving voltage VL is lower than a predetermined third grounding detection voltage in the first state $\phi1$ or the second state $\phi2$.
2. A function for carrying out a control for stopping the driving operation of the discharge lamp 4 when the third assumed grounding condition is maintained for a longer period of time than a predetermined confirmation time.
3. A function for returning to the normal operation when the third assumed grounding condition is cancelled before the confirmation time passes.

Although the description has been given to the case in which the positive output voltages Vo1 and Vo2 are generated and applied to the discharge lamp 4 (which is referred to as positive lighting) in the embodiment, it is also possible to generate negative output voltages Vo1 and Vo2, thereby driving the discharge lamp 4 (which is referred to as negative lighting). In this case, it is preferable to invert the directions of the first rectifier diode D1 and the second rectifier diode D2, the polarities of the secondary windings of the first and second transformers 14 and 16, and the directions of the switching devices M1 and M2 connected to the secondary winding side of the respective transformers in Fig. 1.

It is also possible to use a microcomputer in the control circuit 10 of the discharge lamp lighting circuit 100 according to the embodiment or a part thereof.

Although the description has been given by taking, as an example, the discharge lamp lighting circuit 100 for driving the discharge lamp 4 for a vehicle in the embodiment, the use of the invention is not restricted thereto but the invention can be widely applied to a discharge lamp lighting circuit including two DC/DC converters which are required to detect a grounding condition on an output side.

The logical values of the high and low levels of the signal are set as illustrative in the circuit described in the embodiment, and can be freely changed through a proper inversion by means of an inverter.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1. A discharge lamp lighting circuit comprising:

a first DC/DC converter configured to apply a first driving voltage to one of ends of a discharge lamp in an active state;

a second DC/DC converter configured to apply a second driving voltage to the other end of the discharge lamp in an active state; and

a control circuit configured to control the first and second DC/DC converters based on a normal operation mode and a grounding confirmation mode,

wherein in the normal operation mode, the control circuit is configured to alternately set the first and second DC/DC converters into the active state in a lighting cycle, thereby applying an AC driving voltage to the discharge lamp,

wherein the control circuit is configured to enter the grounding confirmation mode when detecting a first assumed grounding condition in which a driving current flowing to the discharge lamp is smaller than a first grounding detection current and the first driving voltage is lower than a first grounding detection voltage or detecting a second assumed grounding condition in which the driving current flowing to the discharge lamp is smaller than a second grounding detection current and the second driving voltage is lower than a second grounding detection voltage, and

wherein in the grounding confirmation mode, the control circuit is configured to fix the first DC/DC converter into the active state while the first assumed grounding condition is maintained continuously, and carries out a control for stopping a driving operation of the discharge lamp if the first assumed grounding condition is continuously maintained for a longer period of time than a first confirmation time, and fix the second DC/DC converter into the active state while the second assumed grounding condition is maintained continuously, and carries out the control for stopping the driving operation of the discharge lamp if the second assumed grounding condition is continuously maintained for a longer period of time than a second confirmation time.

2. The discharge lamp lighting circuit according to claim 1, wherein the control circuit is configured to set, in the grounding confirmation mode, an output power of the DC/DC converter fixed into the active state to be lower than that in the active state of the DC/DC converter in the normal operation mode.

3. The discharge lamp lighting circuit according to claim 1 or 2, wherein the control circuit is configured to be returned into the normal operation mode when the first assumed grounding condition is cancelled before the first confirmation time passes, and is configured to be returned into the normal operation mode when the second assumed grounding condition is cancelled before the second confirmation time passes in the grounding conformation mode.

4. A discharge lamp lighting method comprising:

setting a driving power to be supplied to a discharge lamp to be lower than that to be supplied in a normal operation when detecting an assumed grounding condition in which a driving current flowing to the discharge lamp is smaller than a grounding detection current and a driving voltage to be applied to the discharge lamp is lower than a grounding detection voltage;

carrying out a control for stopping a driving operation of the discharge lamp when the assumed grounding condition is continuously maintained for a longer period of time than a confirmation time; and

returning to a normal operation when the assumed grounding condition is cancelled before the confirmation time passes.

FIG. 1

*FIG. 2*

FIG. 3

FIG. 4A

FIG. 4B

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11329777 A
- JP 2008299638 A